# EUROPEAN PATENT SPECIFICATION

(11) **EP 4 563 311 B1**
(45) Date of publication and mention of the grant of the patent: **04.11.2026**
(21) Application number: 24202441.2
(22) Date of filing: 25.09.2024
(51) Int. Cl.: B28B 1/30, B28B 23/00, B29C 70/38, C04B 35/80

(54) **METHOD FOR COMPACTING CERAMIC COMPOSITE MATERIALS**
VERFAHREN ZUM VERDICHTEN VON KERAMISCHEN VERBUNDWERKSTOFFEN
PROCÉDÉ DE COMPACTAGE DE MATÉRIAUX COMPOSITES CÉRAMIQUES

(30) Priority: 29.11.2023 US 202363603750 P; 22.01.2024 NL 2036866
(43) Date of publication of application: 04.06.2025
(73) Proprietor: The Boeing Company, Arlington, VA 22202 (US)
(72) Inventor: Heng, Sangvavann, ARLINGTON, 22202 (US); Johnson, Brice A., ARLINGTON, 22202 (US); Litwinski, Mary M., ARLINGTON, 22202 (US); Hu, Elisabeth C., ARLINGTON, 22202 (US)
(74) Representative: Arnold & Siedsma

(56) References cited:
- WO-A1-2022/112681
- FR-A1- 3 072 672
- FR-A1- 3 133 334
- US-A1- 2014 190 629
- US-A1- 2017 274 636

## Description

The present disclosure relates generally to composite manufacturing and, more particularly, to manufacturing non-polymer composite structures, such as ceramic matrix composites, and, more particularly, to methods for compacting ceramic matrix composite materials.

Currently, compaction of ceramic matrix composite plies on layup tools is a manual operation performed using hand pressure, sweeping, and vacuum bagging techniques. This results in variable quality and inconsistencies in the compaction. These manual operations require skilled technicians, are time intensive, require inspection and rework, and lead to overall increased life cycle time for compaction of the ceramic matrix composite ply on the layup tool. Accordingly, those skilled in the art continue with research and development efforts in ceramic matrix composite manufacturing.

The abstract of FR 3 133 334 A1 states: "The invention relates to a deposition roller of fibrous structures comprising a non-deformable core centered on the axis of rotation of said roller, characterised in that the roller further comprises a deformable outer skin held concentrically around the core by a layer of deformable material interposed between said skin and said core in the absence of application of pressure by the roller, the roller further comprising at least one sensor capable of measuring the distance or a variation in the distance between the skin and the core".

In particular, FR 3 133 334 A1 recites in claim 9 a method of manufacturing a part in composite material comprising the formation of a fibrous preform by depositing on a surface a plurality of fibrous structures by automatic placement of fibers using the installation for applying fibrous structures and the formation of a matrix in the porosities of the fibrous preform.

The description of FR 3 133 334 A1 recites in paragraph 29 that figures 1 and 2 (of FR 3 133 334 A1) illustrate a deposition roller according to the invention for draping fibrous structures by automatic placement of fibers. This deposition roller is intended to roll, at least in part, over a draping surface in order to deposit fibrous structures on said draping surface. The deposit roller comprises a rigid core centered on the axis of rotation A of the roller.

Paragraph 42 further recites that figures 4 and 5 (of FR 3 133 334 A1) schematically and partially illustrate an installation according to the invention, comprising the deposition roller, for draping fibrous structures onto a draping surface S by automatic placement of fibers, in order to form a fibrous preform. In paragraph 45, it is recited that the fibrous structures can include continuous, long or short fibers and that the fibers of fibrous structures can be ceramic or carbon fibers. This paragraph also states that ceramic fibers can be made of non-oxide material, such as silicon carbide (SiC), or of oxide material, such as alumina.

Paragraph 50 subsequently recites that, during the draping operation, the application head is mobile along a draping direction D in order to apply the fibrous structures to a first determined area of the draping surface S. Once the application has been carried out on the first area, the cutting element of the application head cuts the fibrous structures so as to form a first strip of fibrous structures on the first area of the draping surface S.

Paragraphs 54 to 62 recite further aspects of FR 3 133 334 A1. This includes that, during draping, the deformable material layer and the deformable outer skin deform in order to adapt to the geometry of the draping surface S. The sensor then measures the radial distances or the variations in radial distances between the deformable outer skin and the undeformable core. These measurements are then processed by a control device for the force applied to the surface S, capable of controlling the compaction pressure P applied by the deposit roller(s) on the surface S, so as to apply an optimal compaction pressure P adapted at each moment to the geometry of the draping surface S present under the deposit roller(s). Applying a compaction pressure P adapted to the irregularities of the surface S makes it possible to obtain a final part with good material quality and satisfactory mechanical properties. Preferably, the hooking elements located on either side of the deposit roller are controlled by a cylinder, so as to drive the rotation axis A of the roller in translation in order to apply the desired compaction pressure P.

When a plurality of sensors is arranged along the length of the deposition roller along its axis of rotation A, or when the sensor comprises a plurality of sections arranged along the length of the deposition roller, it is also possible to adapt the compaction pressure P applied to the draping surface S from the measurements of the distance or the variation in distance between the outer skin and the core determined at different points along the length of the deposition roller by the sensors or the sectors of the sensor. Preferably, the sensors or sensor sectors are spaced regularly along the axis of rotation of the roller, so as to define sectors of equal size in the length of the roller, as illustrated in Figures 2, 3 and 5 (of FR 3 133 334 A1).

There represents an example diagram of closed-loop control of the compaction pressure P applied by the deposition roller on the draping surface S. By knowing on the one hand the measured position Am of the rotation axis A of the roller and on the other hand the local distances or local variations of distance measured X1m, X2m, ... Xim between the outer skin and the core for each sensor or sensor sector, it is possible to adjust in real time the compaction pressure P applied by the roller according to the asperities or irregularities of the draping surface S.

Using a measurement processing device, the measured position Am of the rotation axis A of roller is processed to obtain the overall force PA applied by roller. Using a measurement processing device, the local distances or local variations in distance measured X1m, X2m, ... Xim between the outer skin and the core are processed to obtain the local forces PX1, PX2, ... PXi applied by the roller.

The overall effort PA and the local efforts PX1, PX2, ... PXi applied by roller are then compared with the desired value P0 of compaction pressure using a comparator, which transmits a corrected value Pc of compaction pressure to the roller displacement controller. Preferably, the roller displacement controller includes a cylinder.

For example, if the value of the global effort PA and the values of the local efforts PX1, PX2, ... PXi are less than the desired value P0, the comparator transmits a higher corrected value Pc.

On the contrary, if the value of the global effort PA and the values of the local efforts PX1, PX2, ... PXi are greater than the desired value P0, the comparator transmits a lower corrected value Pc.

Similarly, for example, if the value of the global effort PA is less than or equal to the desired value P0, but the values of the local efforts PX1, PX2, ... PXi are greater than the desired value P0, the comparator transmits a lower corrected value Pc.

Thus, not only is the overall measured effort used to control the applied compaction pressure P, but also a set of local efforts measured using the deposition roller 1 of the invention, to allow better draping of the draping surface S, in particular when it is irregular.

When the draping operation is complete, a matrix is then formed within the fibrous preform thus produced. The method of matrix formation within the fibrous preform depends, as is well known, on the constitution of the fibrous structures used for draping.

For example, if the draped fibrous structures were dry or impregnated with a fugitive composition, the matrix can be formed in a well-known manner by infusion or injection of a resin or slip into the fibrous preform after removal of any fugitive composition. Examples include injection molding techniques known as "RTM" for "Resin Transfer Molding", or injection techniques using flexible membranes. Such a technique is described for example in document FR 3 030 503 A1.

According to another example, if the draped fibrous structures were impregnated with a composition comprising a binder and ceramic or carbon fillers, the matrix can be formed in a well-known manner by sintering said fillers. Such a technique is described for example in document FR 3 072 672 A1.

Paragraph 64 further recites that, according to another example, if the draped fibrous structures were impregnated with a composition comprising a binder and ceramic or carbon fillers, the matrix can be formed in a well-known manner by sintering said fillers. Such a technique is described for example in document FR 3 072 672 A1.

The abstract of US 2014/190629 A1 states: "An induction heating compaction system is provided. The system includes an induction heating member and a compaction member. The induction heating member is configured to generate an electromagnetic field at a select frequency. The select frequency causes at least one of the fibers and matrix in pre-preg material to heat up. The compaction member has at least a portion that is made from a material that is transparent to the select frequency of the electromagnetic field generated by the induction heating member. The compaction member includes a cooling assembly that is configured and arranged to extract heat from the pre-preg material while compacting the pre-preg material".

The abstract of US 2014/018057 A1 states: "method for producing a ceramic matrix composite part, includes forming a fiber preform from a plurality of fibrous structures including core-shell particles, the core-shell particles including a core portion formed by a core of ceramic material and a shell formed by an adhesive layer, the adhesive defining an outer surface of the core-shell particles and completely coating the core of ceramic material, and sintering the core-shell particles in the fiber preform obtained in order to form the ceramic matrix in the porosity thereof".

The abstract of 2017/274636 A1 states: "A device for the placement of material on a surface includes a housing, a motor coupled to the housing, and a driving component coupled to the housing and powered by the motor. The device further includes at least one guide chute defining a guide channel with the driving component. The device further includes a layup roller coupled to the housing adjacent the guide channel. The layup roller includes a roller surface and the guide channel is configured to discharge a quantity of material to the roller surface. The layup roller is configured to deposit the material onto the surface".

Disclosed are examples of a method for compacting a ceramic composite material and a system for compacting a ceramic composite material. The following is a non-exhaustive list of examples, which may or may not be claimed, of the subject matter according to the present disclosure.

In an example, the disclosed method includes steps of: (1) positioning a roller in contact with a ply-surface of a ply of the ceramic composite material, wherein the ply is positioned on a compaction-surface; (2) applying a compaction pressure to the ply using the roller such that the contact pressure is substantially uniformly distributed on the ply; and (3) with the roller in contact with the ply-surface and applying the compaction pressure, moving the roller across the ply to conform the ply to the compaction-surface and to maintain a desired thickness of the ply of the ceramic composite material.

In another example, the disclosed method includes steps of: (1) positioning a ply of ceramic composite material on a compaction-surface, wherein the ply of the ceramic composite material includes a ceramic reinforcement and a ceramic matrix; (2) positioning a roller in contact with a ply-surface of the ply; (3) applying a compaction pressure to the ply using the roller, wherein the compaction pressure is substantially uniform along a contact-interface between the roller and the ply; and (4) with the roller in contact with the ply-surface and applying the compaction pressure, moving the roller across the ply to conform the ply to the compaction-surface and to maintain a desired thickness of the ply of the ceramic composite material. This aspect or example may be combined with another of the described aspects/examples or may be provided as a separate aspect that is independent from the other described aspects/examples.

In an example, the disclosed system includes a roller including a core and a covering surrounding the core. The covering is selected such that a compaction pressure applied to a ply of the ceramic composite material is uniform along a contact-interface between the roller and the ply.

Other examples of the system and the method will become apparent from the following detailed description, the accompanying drawings, and the appended claims.
Fig. 1 is a flow diagram of an example of a method for compacting a ceramic composite material;
Fig. 2 is a schematic block diagram of an example of a system for compacting a ceramic composite material;
Fig. 3 is a schematic illustration of an example of the system;
Fig. 4 is a schematic illustration of an example of a roller of the system;
Fig. 5 is a schematic illustration of an example of a portion of the system;
Fig. 6 is a schematic illustration of an example of a portion of the system;
Fig. 7 is a graphical representation of a compaction pressure along a contact-interface between the roller and a ply of ceramic composite material;
Fig. 8 is a schematic illustration of an example of a portion of the system;
Fig. 9 is a schematic illustration of an example of a portion of the system;
Fig. 10 is a flow diagram of an example of an aircraft manufacturing and service method; and
Fig. 11 is a schematic block diagram of an example of an aircraft.

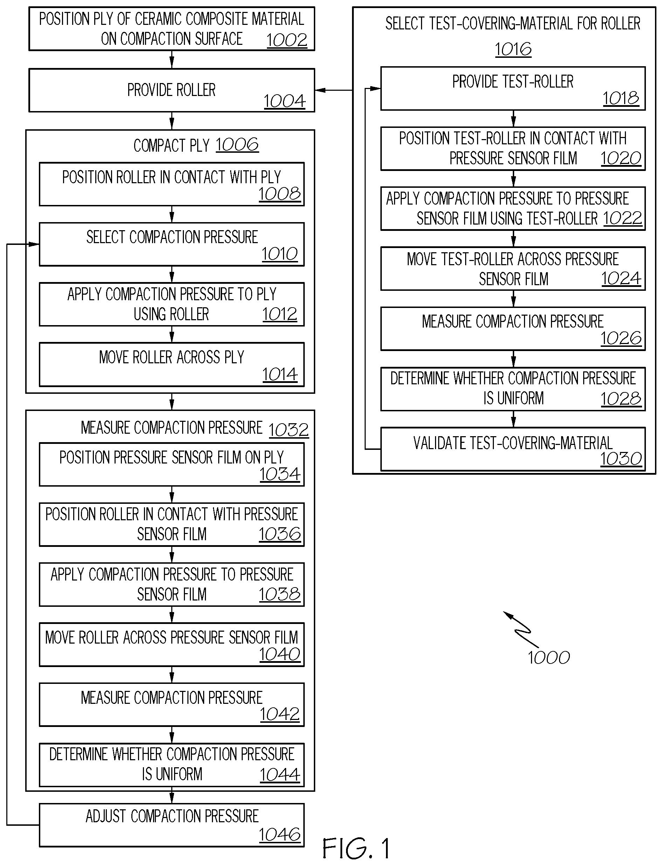

Referring generally to Figs. 1-9, by way of examples, the present disclosure is directed to a method 1000 and a system 100 for compacting a ceramic composite material. The method 1000 and the system 100 facilitate improvements in ceramic matrix composite (CMC) manufacturing by providing substantially uniform pressure distribution to maintain a desired thickness of the ceramic composite material, thereby preventing matrix migration and/or fabric deformation. While examples of the method 1000 and system 100 provide particular advantages and benefits related to manufacturing ceramic matrix composite structures, the method 1000 and system 100 can also be used in manufacturing other non-polymer composite structures.

Ceramic matrix composites (CMCs) are a subgroup of composite materials and a subgroup of ceramics. CMCs include ceramic fibers embedded in a ceramic matrix. Both the fibers and the matrix can include any ceramic material, including carbon and carbon fibers. In one or more examples, a ceramic composite material 200 is a ceramic matrix composite and includes a ceramic reinforcement 204 and a ceramic matrix 208.

In one or more examples, the ceramic reinforcement 204 is pre-impregnated with the ceramic matrix 208. In such examples, a ply 202 of the ceramic composite material 200 can also be referred to as a CMC prepreg.

In one or more examples, the ceramic reinforcement 204 includes at least one of carbon reinforcement fibers, silicon carbide reinforcement fibers, alumina reinforcement fibers, alumina silica reinforcement fibers, aluminum nitride reinforcing fibers, silicon nitride reinforcement fibers, mullite reinforcement fibers, silica/quartz reinforcement fibers, basalt reinforcement fibers, and zirconia reinforcement fibers. Other suitable reinforcement materials are also contemplated for use as the ceramic reinforcement 204.

In one or more examples, the ceramic matrix 208 includes at least one of a carbon matrix, a silicon carbide matrix, an alumina matrix, an alumina silica matrix, an aluminum nitride matrix, a silicon nitride matrix, a mullite matrix, a geo-polymer matrix, and a zirconia matrix. Other suitable matrix materials are also contemplated for use as the ceramic matrix 208.

In one or more examples, the ceramic matrix 208 includes ceramic particles 212 dispersed in a suspension media 214 (e.g., fluid or other vehicle). In one or more examples, the ceramic matrix 208 is an aqueous suspension (e.g., the suspension media 214) includes an aqueous media). In one or more examples, the ceramic matrix 208 is a non-aqueous suspension (e.g., the suspension media 214 includes a non-aqueous media). The ceramic matrix 208 has various viscosities depending on the suspension media 214 used. In one or more examples, the ceramic particles 212 include at least one of carbon particles, silicon carbide particles, alumina particles, alumina silica particles, aluminum nitride particles, silicon nitride particles, mullite particles, geo-polymer particles, and zirconia particles. Other suitable materials are also contemplated for use as the ceramic particles 212.

Typically, the reinforcement material (e.g., ceramic reinforcement 204) of a fabric-based ceramic matrix composite is more brittle than the reinforcement material of a fabric-based polymer matrix composite (PMC). Additionally, the matrix material (e.g., ceramic matrix 208) of a fabric-based ceramic matrix composite is less viscous than the matrix material of a fabric-based polymer matrix composite. As such, traditional compaction techniques and tools used with polymer matrix composites are not suitable for use with ceramic matrix composites.

Pick-and-Place (PnP) robotic layup of fabric-based ceramic matrix composites (e.g., CMC prepregs) requires ply and splice compaction during layup for removing air pockets and wrinkles and to conform the prepreg to a tool before each subsequent ply is applied. Examples of the method 1000 and the system 100 utilize a special roller to compact plies in a similar manner to a smoothing process used during manual layup. In one or more examples, the roller is integrated into a robot end effector. In one or more examples, the system 100 and the method 1000 provide the ability to adjust compaction pressure during compaction forming.

A material for the roller is selected such that the CMC prepreg can be compacted using the roller to maintain the desired thickness of the prepreg without migrating the ceramic matrix or deforming the reinforcement of the CMC prepreg. In one or more examples, several materials are evaluated using a pressure sensor film to determine uniform pressure distribution to maintain the desired thickness and without migrating the ceramic matrix or deforming a ceramic reinforcement of the CMC prepreg, for example, using a feedback control system. In one or more examples, results of the material validation process facilitate down selecting of the several materials to a closed-cell silicone foam with a medium soft hardness of Shore A 5. The hardness of a material can be measured with a Shore durometer (or any other suitable device). Higher numbers on the scale indicate a greater resistance to indentation and thus harder materials. Lower numbers indicate less resistance and softer materials. Advantageously, the compliance of the selected roller material provides pressure uniformity without localized high pressure peaks. The softness of the selected roller material allows for smoothing of the CMC prepreg while maintaining the desired thickness and without reinforcement deformation or matrix migration, while effectively eliminating large, trapped air bubbles. The selected material also facilitates easy cleaning.

It is recognized that automated foam roller compaction, as provided by the method 1000 and the system 100 disclosed herein, is advantageous in fabric-based CMC layup processing to provide key attributes for optimal ply consolidation, thereby leading to desired material properties. These key attributes include applying even pressure to plies and splices; smoothing out plies and splices to conform to a tool surface; removing large, trapped bubbles between a ply stack to minimize voids and porosity; evenly spreading out matrix distribution; minimizing or eliminating ply bridging at corners and in concave regions.

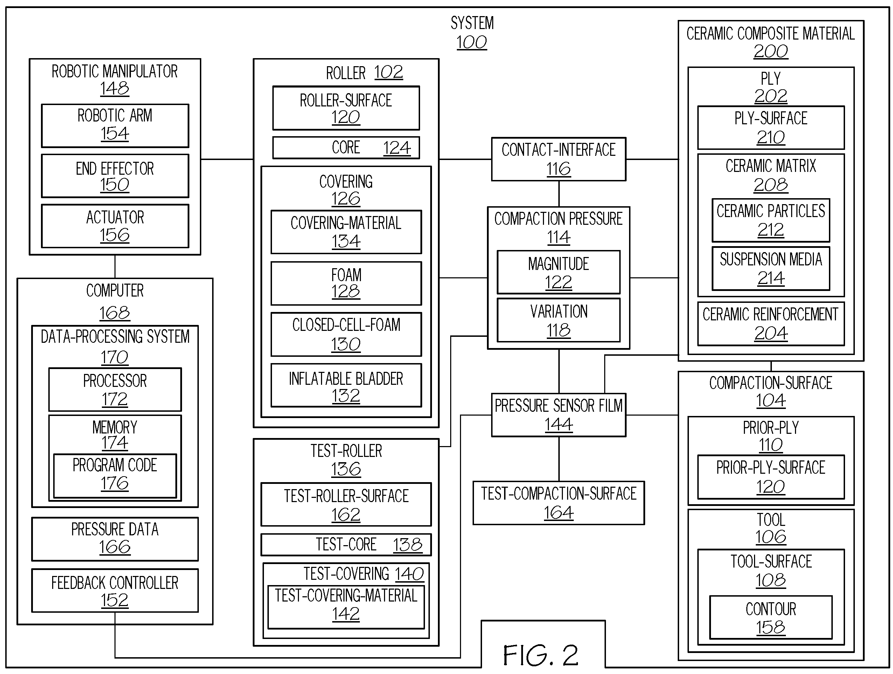

Fig. 1 is a flow diagram illustrating an example of the method 1000. Fig. 2 is a schematic block diagram of an example of the system 100. The method 1000 and the system 100 are applicable to automated pick-and-place and ply consolidation of fabric-based ceramic matrix prepreg, which results in improved part quality and reduced rework.

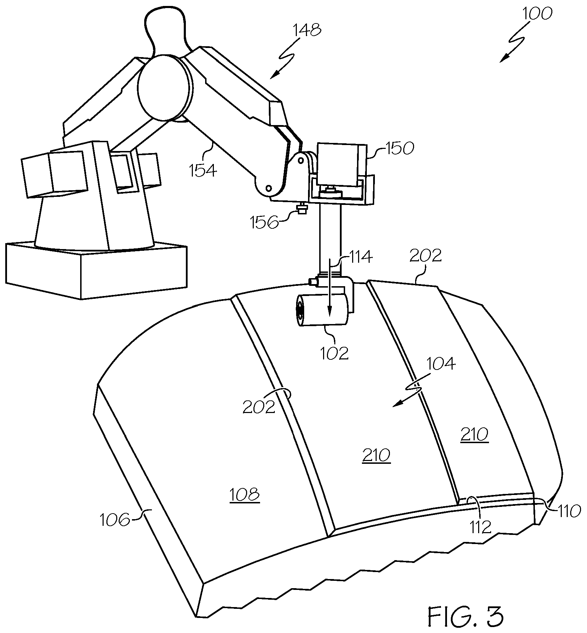

Fig. 3 schematically illustrates an example of the system 100. The illustrated example depicts a roller 102 that is integrated with a robotic end effector 150, which is capable of adjusting a compaction pressure 114 applied by the roller 102 during compaction forming of a ply 202 of the ceramic composite material 200 using the roller 102. The material of the roller 102 is selectively tailored, and the applied compaction pressure 114 is selectively controlled to be sufficiently high to push out trapped air between plies, but not so high to cause matrix migration or prepreg fabric deformation.

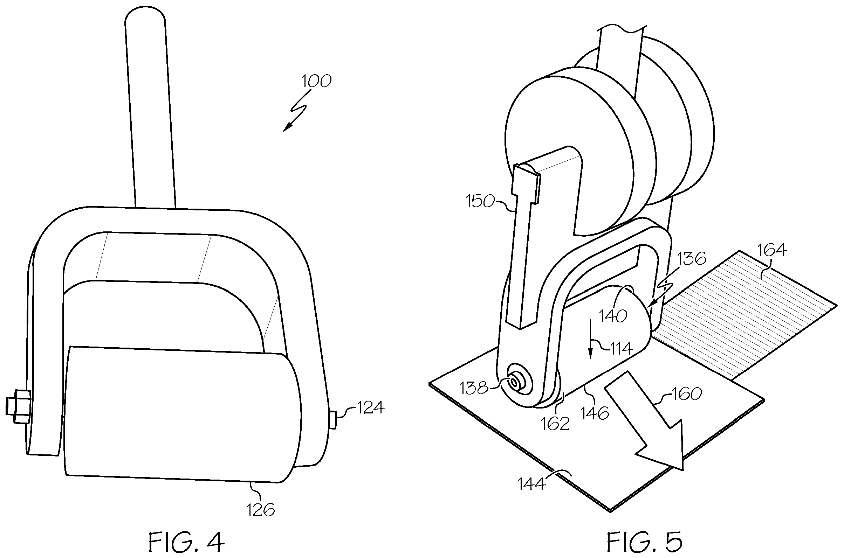

Fig. 4 schematically illustrates an example of the roller 102. The method 1000 and the system 100 utilize a special compaction roller having a softness that is selected for compacting and forming a suspension-based CMC prepreg without causing matrix migration and prepreg fabric deformation.

Fig. 5 schematically illustrates an example of the system 100. In one or more examples, the system 100 is utilized to test and validate different types of materials for use on the roller 102. In these examples, the system 100 utilizes a pressure sensor film 144 to measure the compaction pressure 114 applied by a test-roller 136 to a test-compaction-surface 164. As such, various instances of the test-roller 136 having different material characteristics can be tested to select a desired or suitable material for use on the roller 102 (e.g., Figs. 3 and 4), which will uniformly apply the compaction pressure 114 on the ply 202.

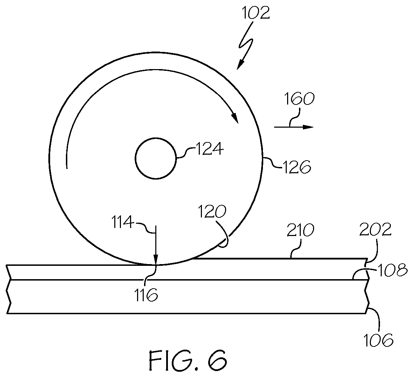

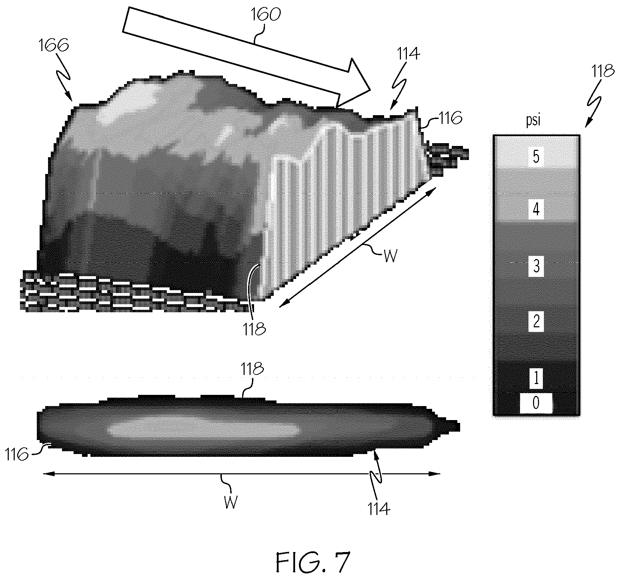

Fig. 6 schematically illustrates an example of the system 100. The illustrated example depicts compaction of the ply 202 of the ceramic composite material 200 using the roller 102 by applying the compaction pressure 114 as the roller 102 moves along a compaction path 160. Fig. 7 graphically illustrates an example of at least approximately uniform application of the compaction pressure 114 by the roller 102.

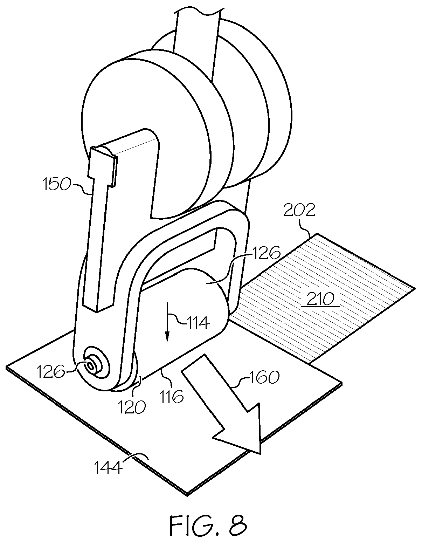

Fig. 8 schematically illustrates an example of the system 100. In one or more examples, the system 100 includes the pressure sensor film 144 to measure the compaction pressure 114 applied by the roller 102 to the ply 202 during compaction. In these examples, the system 100 is configured to adjust the compaction pressure 114 in response to measurements generated by the pressure sensor film 144 and using a feedback controller 152 (Fig. 2) such that the compaction pressure 114 is uniformly applied by the roller 102 to the ply 202.

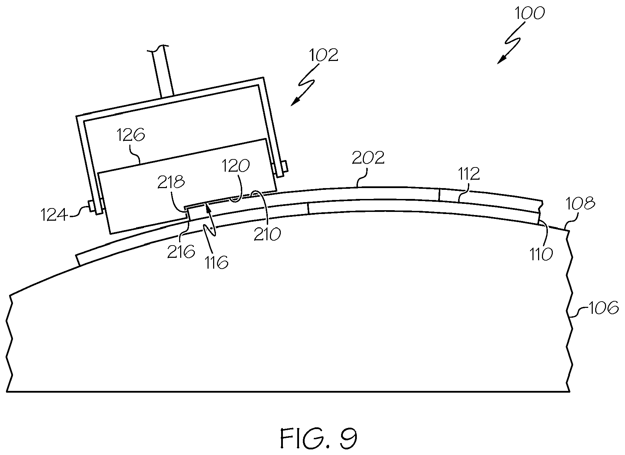

Fig. 9 schematically illustrates an example of the system 100. The illustrated example depicts the roller 102 being used to compact a ply overlap splice, referred to as a splice joint 216. In the illustrated example, multiple layers of plies have uneven ply-surfaces and at least one of the plies has an exposed ply-edge 218. In these examples, the material of the roller 102 is selected such that the compaction pressure 114 is uniformly applied by the roller 102 over the splice joint 216 of the plies.

Referring particularly to Fig. 1 and generally to Figs. 2-9, the following are examples of the method 1000, according to the present disclosure. In one or more examples, the method 1000 is implemented using the system 100 or the roller 102 (e.g., Figs. 2-9). The method 1000 includes a number of elements, steps, and/or operations. Not all of the elements, steps, and/or operations described or illustrated in one example are required in that example. Some or all of the elements, steps, and/or operations described or illustrated in one example can be combined with other examples in various ways without the need to include other elements, steps, and/or operations described in those other examples, even though such combination or combinations are not explicitly described or illustrated by example herein.

In one or more examples, one or more steps of the method 1000 is electronically controlled or computer controlled (e.g., under direction of a computer 168). As such, in one or more examples, the method 1000 is an electronically-controller method or a computer-implemented method.

Referring to Fig. 1, in one or more examples, the method 1000 includes a step of (block 1002) positioning a ply 202 of the ceramic composite material 200 on a compaction-surface 104. The compaction-surface 104 can have any suitable size, shape, or geometry. The compaction-surface 104 provides the shape to which the ply 202 and any subsequently places plies of the ceramic composite material 200 are formed after compaction. In one or more examples, the compaction-surface 104 is planar (e.g., substantially flat). In one or more examples, at least a portion of the compaction-surface 104 includes a contour. In one or more examples, the ply 202 of the ceramic composite material 200 is initially provided in a planar (e.g., substantially flat) form, such as in the form of a sheet or a strip of the ceramic composite material 200. The ply 202 can be placed on the compaction-surface 104 using any suitable method, such as manually or automatically using a suitable pick-and-place end effector.

Referring to Fig. 1, in one or more examples, the method 1000 includes a step of (block 1004) providing the roller 102. The roller 102 is a compaction roller that is utilized for compacting the ply 202 of the ceramic composite material 200 on the compaction-surface 104. In addition to compaction, a purpose of the roller 102 is to provide controlled distortion of a fabric weave of the ply 202 (e.g., the ceramic reinforcement 204) to conform to a surface profile shape of the compaction-surface 104, such as a complex contour. The roller 102 is configured to interact with the stiffness of the fiber of the ceramic reinforcement 204 to cause a material weave of the fabric of the ceramic reinforcement 204 to shear during placement, thereby allowing some movement of the fiber in order to conform the initially flat ply to the contour of the compaction-surface 104. This enables the weave of the ceramic fabric to distort to some desired, suitable, or necessary degree as the ply 202 of the ceramic composite material 200 conforms to the shape of the compaction-surface 104. As will be described in more detail herein, a material used for the roller 102 and, more particularly, the softness/ hardness of the roller material, a compaction force applied to the ply 202 by the roller 102, the uniformity of the compaction force applied to the ply 202 by the roller 102, and other parameters are selected to maintain a desired thickness of the ply 202, to not result in migration of the ceramic matrix 208 of the ply 202 of the ceramic composite material 200, and to not result in deformation of the ceramic reinforcement 204 of the ply 202 of the ceramic composite material 200. In other words, in various examples, the roller 102 enables uniformity of the compaction force applied to the ply 202 by the roller 102, thereby enabling conformation of the fabric weave of the ceramic reinforcement 204 of the ply 202 to the compaction-surface 104 while maintaining the desired thickness of the ply 202 but preventing migration of the ceramic matrix 208 and/or deformation of the fabric weave of the ceramic reinforcement 204 of the ply 202, which results in an undesirable thickness of the ply 202.

For the purpose of the present disclosure, the terms "conform," "conforming," "conformation," and similar terms, used in association with compaction of the ply 202 (e.g., application of the compaction pressure 114 to the ply 202) of the ceramic composite material 200, refer to a desirable or suitable degree of distortion of the fabric weave of the ply 202 (e.g., the ceramic reinforcement 204), such as in the form of shearing of the weave pattern, necessary to conform the ply 202 to the desired contour of the compaction-surface 104. As an example, the roller 102 is configured to form the material of the ply 202 onto the compaction-surface 104, whether flat or contoured, without deforming the fabric material of the ceramic reinforcement 204. In one or more examples, initially the ply 202 has a generally flat configuration. When placing the ply 202 on the compaction-surface 104, the compaction pressure 114 is applied to the ply 202 by the roller 102 such that the ply 202 conforms to the contour (e.g., flat, curved, or any other simple or complex contour). When conforming to a contour of the compaction-surface 104, the material of the ply 202 (e.g., the ceramic reinforcement 204) has to distort to some degree, such as in the form of shearing of the weave pattern, for example, from an at least approximately orthogonal weave pattern into a non-orthogonal weave pattern.

For the purpose of the present disclosure, the terms "deform," "deforming," "deformation," and similar terms, used in association with compaction of the ply 202 (e.g., application of the compaction pressure 114 to the ply 202) of the ceramic composite material 200, refer to an undesirable or unsuitable degree of distortion of the fabric weave of the ply 202 (e.g., the ceramic reinforcement 204) that exceeds what is necessary for acceptable conformance to the contour of the compaction-surface 104 or that is inadequate for acceptable conformance to the contour of the compaction-surface 104. Examples of such deformation of the ply 202 in response to compaction include, but are not limited to, wrinkling, bubbling, pleating, puckering, bridging, or other deformities in the ceramic reinforcement 204.

For the purpose of the present disclosure, the "desired thickness" of the ply 202 of the ceramic composite material 200 refers to the desired thickness (e.g., through-thickness) of the ceramic reinforcement 204 impregnated with or embedded in the ceramic matrix 208 during or after compaction by the roller 102. Migration of the ceramic matrix 208 refers to the undesirable spreading out of the ceramic matrix 208 in response to the compaction pressure 114 applied to the ply 202 by the roller 102. Thus, migration of the ceramic matrix 208 and/or deformation of the ceramic reinforcement 204 results in an undesirable thickness.

Referring to Figs. 1 and 2, in one or more examples, the method 1000 includes a step of (block 1006) compacting the ply 202 of the ceramic composite material 200 on the compaction-surface 104. The compacting step (block 1006) is performed using the system 100 and, more particularly, using the roller 102. In one or more examples, the compaction step (block 1006) is electronically controlled or computer controlled (e.g., under direction of a computer 168). Generally, the compaction step (block 1006) conforms the ceramic reinforcement 204 of the ply 202 to a contour 158 of the compaction-surface 104 and maintains the desired thickness of the ply 202 and, thus, prevents migration the ceramic matrix 208 of the ply 202 and/or deformation of the ceramic reinforcement 204 of the ply 202.

Referring to Figs. 1 and 2, in one or more examples, the method 1000, such as the compacting step (block 1006), includes a step of (block 1008) positioning the roller 102 in contact with a ply-surface 210 of the ply 202 of the ceramic composite material 200. The roller 102 is positioned against the ply 202 while the ply 202 is positioned on the compaction-surface 104. The roller 102 can be positioned by any suitable method, such as automatically using a robotic arm, an overhead gantry, one or more actuators, and the like or combinations thereof, which are configured to controllably position and move the roller 102 in three-dimensional space, such as under the direction of a controller.

Referring to Figs. 1 and 2, in one or more examples, the method 1000, such as the compacting step (block 1006), includes a step of (block 1012) applying the compaction pressure 114 to the ply 202. The compaction pressure 114 is applied using the roller 102 such that the compaction pressure 114 is substantially uniformly distributed on the ply 202. The compaction pressure 114 refers to the compaction force applied to the ply 202 by the roller 102 over a contact-interface 116 between a roller-surface 120 of the roller 102 and the ply-surface 210 of the ply 202. The compaction pressure 114 can be applied by the roller 102 by any suitable method, such as automatically using a robotic arm, an overhead gantry, one or more actuators, and the like or combinations thereof, which are configured to controllably position and move the roller 102 in three-dimensional space, such as under the direction of a controller.

Referring to Figs. 1 and 2, in one or more examples, with the roller 102 in contact with the ply-surface 210 (block 1008) and applying the compaction pressure 114 (block 1012), the method 1000, such as the compacting step (block 1006), includes a step of (block 1014) moving the roller 102 across the ply 202 while maintaining the desired thickness of the ply 202 and, thus, without migrating the ceramic matrix 208 or deforming the ceramic reinforcement 204 of the ply 202 of the ceramic composite material 200. The roller 102 is moved along a compaction path 160. The roller 102 can be moved across the ply-surface 210 of the ply 202 by any suitable method, such as automatically using a robotic arm, an overhead gantry, one or more actuators, and the like or combinations thereof, which are configured to controllably position and move the roller 102 in three-dimensional space, such as under the direction of a controller.

Referring to Figs. 1 and 2, in one or more examples, the method 1000 includes a step of (block 1010) selecting the compaction pressure 114. As an example, the selecting step (block 1010) includes a step of selecting a magnitude 122 of the compaction pressure 114. Generally, the magnitude 122 of the compaction pressure 114 refers to the measurable quantity of the compaction force over the contact-interface 116 (e.g., area) between the roller-surface 120 and the ply-surface 210. The magnitude 122 of the compaction pressure 114 is selected to remove air pockets from the ply 202, to remove wrinkles from the ply 202, and to conform the ply 202 to the compaction-surface 104 while moving the roller 102 across the ply 202. The magnitude 122 of the compaction pressure 114 is selected to permit conformation of the ply 202, such as shearing of the fabric weave of the ceramic reinforcement 204 of the ply 202, and not result in deforming, such as wrinkling, bubbling, pleating, puckering, and/or bridging of the fabric weave of the ceramic reinforcement 204 of the ply 202, and to not migrate the ceramic matrix 208 of the ply 202 while moving the roller 102 across the ply 202. As such, the compaction pressure 114 applied by the roller 102 is selected for compacting the ply 202 of the ceramic composite material 200 on the compaction-surface 104. In addition to compaction, the selected magnitude 122 of the compaction pressure 114 provides controlled conformation (e.g., shearing) without deformation (e.g., wrinkling) of the fabric weave of the ply 202 (e.g., the ceramic reinforcement 204) to conform to a surface profile shape of the compaction-surface 104, such as a complex contour. The compaction pressure 114, along with the roller material selected for the roller 102, are configured to interact with the stiffness of the fiber of the ceramic reinforcement 204 to cause a material weave of the fabric of the ceramic reinforcement 204 to shear during placement, thereby allowing some movement of the fiber in order to conform the initially flat ply to the contour of the compaction-surface 104. This enables the weave of the ceramic fabric to distort to a desired or necessary degree as the ply 202 of the ceramic composite material 200 conforms to the shape of the compaction-surface 104 but not distort to a degree that exceeds what is necessary for acceptable conformance to the contour of the compaction-surface 104.

Referring to Figs. 2 and 3, in one or more examples, according to the method 1000, the compaction-surface 104 includes or takes the form of a tool-surface 108 of a tool 106. The tool 106 includes any suitable layup tool, forming tool, mandrel tool, and the like, which is configured to support and provide the underlying shape for a layup of a plurality of plies (e.g., stack) of the ceramic composite material 200. In one or more examples, the tool-surface 108 is planar (e.g., substantially flat). In one or more examples, at least a portion of the tool-surface 108 includes a contour.

Referring to Figs. 2 and 3, in one or more examples, according to the method 1000, the compaction-surface 104 includes or takes the form of a prior-ply-surface 112 of a prior-ply 110 of the ceramic composite material 200. The prior-ply 110 refers to a ply of the ceramic composite material 200 that has previously been placed and compacted on the tool 106. In one or more examples, the prior-ply-surface 112 is planar (e.g., substantially flat). In one or more examples, at least a portion of the prior-ply-surface 112 includes a contour.

Referring to Figs. 2, 6 and 7, in one or more examples, according to the method 1000, the compaction pressure 114 is uniform along the contact-interface 116 between the roller-surface 120 of the roller 102 and the ply-surface 210 of the ply 202. The roller 102 is configured to apply the compaction pressure 114 uniformly over the contact interface 116 for any expected surface contour, such as flat surfaces, curved surfaces, or any other contoured surface. Accordingly, the roller 102 is configured to be compliant to the surface profile shape of the compaction-surface 104 over any surface contour without significant variation in pressure distribution. In one or more examples, the contact-interface 116 is defined by or corresponds to a width W of the roller 102. Generally, and as illustrated in Fig. 7, uniformity of the compaction pressure 114 along the contact-interface 116 refers to a degree of a variation 118 in the compaction pressure 114 along the contact-interface 116 during compaction of the ply 202 (block 1006). The variation 118 refers to a change or difference in the compaction pressure 114 within the area formed by the contact-interface 116 between the roller-surface 120 of the roller 102 and the ply-surface 210 of the ply 202 while moving the roller 102 along or in the direction of the compaction path 160. In one or more examples, compression of the material of the roller 102, such as a relatively soft material, provides a compaction force that will naturally introduce some variation depending on the amount the roller 102 compresses at any point along the contact-interface 116 and the stiffness of the material of the roller 102. As will be described in greater detail herein, the material of the roller 102 is selected such that the compaction pressure 114 applied to the ply 202 by the roller 102 is at least approximately uniform along the contact-interface 116.

Referring to Figs. 2 and 7, in one or more examples, according to the method 1000, the variation 118 in the compaction pressure 114 along the contact-interface 116 is less than 34.4748 kPa (5 PSI). In one or more examples, according to the method 1000, the variation 118 in the compaction pressure 114 along the contact-interface 116 is less than 20.6843 kPa (3 PSI). In one or more examples, according to the method 1000, the variation 118 in the compaction pressure 114 along the contact-interface 116 is less than 6.8948 kPa (1 PSI).

Referring to Figs. 2 and 4-6, in one or more examples, according to the method 1000, the roller 102 includes a core 124 and a covering 126. The covering 126 surrounds the core 124. In one or more examples, the core 124 is solid. In one or more examples, the core 124 is hollow. The core 124 can be made of any one of a variety of suitable materials or combinations thereof. The covering 126 can be made of any one of a variety of suitable materials or combinations thereof.

Referring to Fig. 2, in one or more examples, according to the method 1000, the covering 126 includes foam 128. The foam 128 being selected as the material for the covering 126 of the roller 102 provides a relatively soft material that enables the compaction pressure 114 applied to the ply 202 by the roller 102 to be at least approximately uniform along the contact-interface 116, over the expected range of surface contours.

Referring to Fig. 2, in one or more examples, according to the method 1000, the foam 128 includes closed-cell foam 130. The closed-cell foam 130 being selected as the material for the covering 126 of the roller 102 provides a relatively soft material that enables the compaction pressure 114 applied to the ply 202 by the roller 102 to be at least approximately uniform along the contact-interface 116. The closed-cell foam 130 as the material for the covering 126 of the roller 102 also provides the roller-surface 120 of the roller 102 that is resistant or impermeable to the ceramic matrix 208 of the ceramic composite material 200.

Referring to Fig. 2, in one or more examples, according to the method 1000, the covering 126 includes an inflatable bladder 132. The inflatable bladder 132 being selected as the material for the covering 126 of the roller 102 provides a relatively soft material that enables the compaction pressure 114 applied to the ply 202 by the roller 102 to be at least approximately uniform along the contact-interface 116. The inflatable bladder 132 being selected as the material for the covering 126 of the roller 102 also provides the roller-surface 120 of the roller 102 that is resistant or impermeable to the ceramic matrix 208 of the ceramic composite material 200. The inflatable bladder 132 being selected as the material for the covering 126 of the roller 102 also enables selective control over the softness and hardness of the roller 102 by varying an internal pressure of the inflatable bladder 132 without needing to replace the roller 102.

Referring to Fig. 2, in one or more examples, according to the method 1000, the covering 126 is impermeable. The impermeable material being selected for the covering 126 of the roller 102 provides the roller-surface 120 of the roller 102 that is impermeable to the ceramic matrix 208 of the ceramic composite material 200.

Referring to Fig. 2, in one or more examples, according to the method 1000, the covering 126 includes a Shore A hardness of between approximately 1 and 10. In one or more examples, according to the method 1000, the covering 126 includes a Shore A hardness of between approximately 3 and 7. In one or more examples, according to the method 1000, the covering 126 includes a Shore A hardness of approximately 5. It has been determined through testing and validation that selecting and using a material for the covering 126 that has a Shore A hardness of between approximately 1 and 10, such as between approximately 3 and 7, such as approximately 5, enables the compaction pressure 114 applied to the ply 202 by the roller 102 to be at least approximately uniform along the contact-interface 116, for example, such that the variation 118 in the compaction pressure 114 along the contact-interface 116 is less than 34.4748 kPa (5 PSI), such as less than 20.6843 kPa (3 PSI), such as less than 6.8948 kPa (1 PSI).

Referring to Fig. 2, in one or more examples, according to the method 1000, the covering 126 includes silicone, such as a closed cell silicone foam or an inflatable silicone bladder. In one or more examples, according to the method 1000, the covering 126 includes urethane, such as a closed cell urethane foam or an inflatable urethane bladder. In one or more examples, according to the method 1000, the covering 126 includes polyurethane, such as a closed cell polyurethane foam or an inflatable polyurethane bladder. In one or more examples, according to the method 1000, the covering 126 includes latex, such as a closed cell latex foam or an inflatable latex bladder.

Referring to Figs. 1 and 2, in one or more examples, the method 1000 includes a step of (block 1016) selecting a covering-material 134 for the covering 126. The covering-material 134 is selected such that the compaction pressure 114 is uniform along the contact-interface 116 between the roller 102 and the ply 202 when moving the roller 102 across the ply 202 (block 1014).

Referring to Figs. 1 and 2, in one or more examples, according to the method 1000, the covering-material 134 is selected such that the variation 118 in the compaction pressure 114 along the contact-interface 116 is less than 34.4748 kPa (5 PSI). In one or more examples, according to the method 1000, the covering-material 134 is selected such that the variation 118 in the compaction pressure 114 along the contact-interface 116 is less than 20,6843 kPa (3 PSI). In one or more examples, according to the method 1000, the covering-material 134 is selected such that a variation 118 in the compaction pressure 114 along the contact-interface 116 is less than 6.8948 kPa (1 PSI).

Referring to Figs. 1 and 2, in one or more examples, the method 1000, such as the selecting step (block 1016) includes a step of (block 1018) providing a test-roller 136. The test-roller 136 includes a test-core 138 and a test-covering 140 that surrounds the test-core 138. The test-covering 140 includes a test-covering-material 142. In these examples, the test-covering-material 142 is selected from various material options having different material compositions (e.g., silicone, urethane, polyurethane, latex, etc.), different material structures (e.g., foam, closed cell foam, inflatable bladder, etc.), different hardness (e.g.., Shore A hardness between approximately 1 and 10, Shore A hardness between approximately 3 and 7, Shore A hardness of approximately 5, etc.) and the like.

Referring to Figs. 1, 2, 5 and 7, in one or more examples, the method 1000, such as the selecting step (block 1016), includes a step of (block 1020) positioning the test-roller 136 in contact with a pressure sensor film 144. The pressure sensor film 144 includes or takes the form of any suitable tactile pressure sensor that is configured or otherwise operates to measure force and pressure distribution between contacting surfaces, including flat or contoured surfaces. In one or more examples, the pressure sensor film 144 utilizes a thin and flexible sensor positioned between a test-roller-surface 162 and the test-roller 136 and an underlying test-compaction-surface 164 and the feedback controller 152 to measure and map the interface pressure (e.g., Fig. 7) between the test-roller 136 and the underlying test-compaction-surface 164 while moving the test-roller 136 across the pressure sensor film 144. The resulting pressure data 166 (e.g., as illustrated in Fig. 7) generated by the pressure sensor film 144 can be analyzed using computational analysis tools or other software applications and programs that offer insights to enhance material selection, movement speed, compaction pressure, pressure uniformity, and the like. Therefore, the measuring of the compaction pressure contributes to better insights for one or more of the aforementioned aspects, for example. This enables improving the compacting process.

Referring to Figs. 1, 2 and 5, in one or more examples, the method 1000, such as the selecting step (block 1016), includes a step of (block 1022) applying the compaction pressure 114 to the pressure sensor film 144 using the test-roller 136.

Referring to Figs. 1, 2 and 5, in one or more examples, with the test-roller 136 in contact with the pressure sensor film 144 (block 1020) and applying the compaction pressure 114 (block 1022), the method 1000, such as the selecting step (block 1016), includes a step of (block 1024) moving the test-roller 136 across the pressure sensor film 144.

Referring to Figs. 1, 2 and 5, in one or more examples, the method 1000, such as the selecting step (block 1016), includes a step of (block 1026) measuring the compaction pressure 114 while moving the test-roller 136 across the pressure sensor film 144 in the direction of the compaction path 160. The compaction pressure 114 is measured using the pressure sensor film 144, which provides the pressure data 166 that is analyzed, for example, by a computer 168.

Referring to Figs. 1 and 2, in one or more examples, the method 1000, such as the selecting step (block 1016), includes a step of (block 1028) determining whether the compaction pressure 114 is uniform along a test-contact-interface 146 between the test-roller 136 and the pressure sensor film 144 when moving the test-roller 136 across the pressure sensor film 144.

Referring to Figs. 1 and 2, in one or more examples, the method 1000, such as the selecting step (block 1016), includes a step of (block 1030) validating the test-covering-material 142 when the compaction pressure 114 is uniform along the test-contact-interface 146. In cases in which the test-covering-material 142 being tested provides the compaction pressure 114 that is not uniform (e.g., the variation 118 is greater than a desired threshold) along the test-contact-interface 146, that instance of the test-covering-material 142 is deemed unsatisfactory for the covering-material 134 to be used for the roller 102. In cases in which the test-covering-material 142 being tested provides the compaction pressure 114 that is uniform (e.g., the variation 118 is less than or equal to a desired threshold) along the test-contact-interface 146, that instance of the test-covering-material 142 is deemed satisfactory for the covering-material 134 to be used for the roller 102.

Referring to Fig. 1, in one or more examples, according to the method 1000, the selecting step (block 1016) can be performed (e.g., repeated) any number of times for any number of different types or variations on the test-covering-material 142 until one or more are validated as satisfactory for use as the covering-material 134 of the roller 102.

Referring to Figs. 1 and 2, in one or more examples, according to the method 1000, such as the validation step (block 1030), the compaction pressure 114 is determined as uniform when the variation 118 in the compaction pressure 114 along the test-contact-interface 146 is less than 34.4748 kPa (5 PSI). In one or more examples, according to the method 1000, such as the validation step (block 1030), the compaction pressure 114 is determined as uniform when the variation 118 in the compaction pressure 114 along the test-contact-interface 146 is less than 20,6843 kPa (3 PSI). In one or more examples, according to the method 1000, such as the validation step (block 1030), the compaction pressure 114 is determined as uniform when the variation 118 in the compaction pressure 114 along the test-contact-interface 146 is less than 6.8948 kPa (1 PSI).

Referring to Figs. 1, 2 and 8, in one or more examples, the method 1000 includes a step of (block 1032) measuring the compaction pressure 114 while compacting the ply 202 (block 1006), such as while moving the roller 102 across the ply 202 (block 1014). The compaction pressure 114 is measured (block 1032) using the pressure sensor film 144, which provides the pressure data 166 that is analyzed, for example, by the computer 168.

Referring to Figs. 1, 2 and 8, in one or more examples, the method 1000 includes a step of (block 1046) adjusting the compaction pressure 114 in response to the measuring (block 1032) when the compaction pressure 114 is not uniform along the contact-interface 116 between the roller 102 and the ply 202. In one or more examples, the pressure sensor film 144 utilizes a thin and flexible sensor positioned between the roller-surface 120 of the roller 102 and an underlying instance of the ply 202 and the feedback controller 152 to measure and map the interface pressure (e.g., Fig. 7) between the roller 102 and the ply 202 while moving the roller 102 across the pressure sensor film 144. The resulting pressure data 166 (e.g., as illustrated in Fig. 7) generated by the pressure sensor film 144 can be analyzed using computational analysis tools or other software applications and programs to adjust the compaction pressure 114.

Referring to Figs. 1, 2 and 8, in one or more examples, the method 1000, such as the measuring step (block 1032), includes a step of (block 1034) positioning the pressure sensor film 144 in contact with the ply-surface 210 of the ply 202.

Referring to Figs. 1, 2 and 8, in one or more examples, the method 1000, such as the measuring step (block 1032), includes a step of (block 1036) positioning the roller 102 in contact with the pressure sensor film 144. In one or more examples, when measuring the compaction pressure 114 (block 1032), the positioning step (block 1036) takes the place of or represents the positioning step (block 1008) during compaction.

Referring to Figs. 1, 2 and 8, in one or more examples, the method 1000, such as the measuring step (block 1032), includes a step of (block 1038) applying the compaction pressure 114 to the pressure sensor film 144 (e.g., to the ply 202 through the pressure sensor film 144) using the roller 102. In one or more examples, when measuring the compaction pressure 114 (block 1032), the applying step (block 1038) takes the place of or represents the applying step (block 1012) during compaction.

Referring to Figs. 1, 2 and 8, in one or more examples, with the roller 102 in contact with the pressure sensor film 144 (block 1036) and applying the compaction pressure 114 (block 1038), the method 1000, such as the measuring step (block 1032), includes a step of (block 1040) moving the roller 102 across the pressure sensor film 144. In one or more examples, when measuring the compaction pressure 114 (block 1032), the moving step (block 1040) takes the place of or represents the moving step (block 1014) during compaction.

Referring to Figs. 1, 2 and 8, in one or more examples, the method 1000, such as the measuring step (block 1032), includes a step of (block 1042) measuring the compaction pressure 114 while moving the roller 102 across the pressure sensor film 144 (block 1040).

Referring to Figs. 1, 2 and 8, in one or more examples, the method 1000, such as the measuring step (block 1032), includes a step of (block 1044) determining whether the compaction pressure 114 is uniform along the contact-interface 116 between the roller 102 and the pressure sensor film 144 when moving the roller 102 across the pressure sensor film 144 (block 1040). In cases in which the compaction pressure 114 is determined to be uniform (e.g., the variation 118 is less than or equal to a desired threshold) along the contact-interface 116, the compacting (block 1006) continues by further moving the roller 102 along the compaction path 160. In cases in which the compaction pressure 114 is determined to be not uniform (e.g., the variation 118 is greater than a desired threshold) along the contact-interface 116, the compaction pressure 114 is adjusted (block 1046).

Referring to Fig. 1, accordingly, in one or more examples, the method 1000 for compacting the ceramic composite material 200 includes a step of positioning the ply 202 of the ceramic composite material 200 on the compaction-surface 104. The ply 202 of the ceramic composite material 200 includes the ceramic reinforcement 204 and the ceramic matrix 208. The method 1000 includes a step of positioning the roller 102 in contact with the ply-surface 210 of the ply 202. The method 1000 includes a step of applying the compaction pressure 114 to the ply 202 using the roller 102. The compaction pressure 114 is substantially uniform along the contact-interface 116 between the roller 102 and the ply 202. With the roller 102 in contact with the ply-surface 210 and applying the compaction pressure 114, the method 1000 includes a step of moving the roller 102 across the ply 202 while maintaining the desired thickness of the ply 202 and, thus, without migration of the ceramic matrix 208 or deformation of the ceramic reinforcement 204 of the ply 202 of the ceramic composite material 200.

Referring to Figs. 1 and 2, in one or more examples, the method 1000 includes a step of providing the roller 102. The roller 102 includes the core 124. The roller 102 includes the covering 126 that surrounds the core 124. The covering 126 includes the closed-cell foam 130. The closed-cell foam 130 includes a Shore A hardness of approximately 5.

Referring now to Figs. 2-8, the following are examples of the system 100, according to the present disclosure. The system 100 includes a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

Referring now to Figs. 2-4, 6 and 7, in one or more examples, the system 100 includes the roller 102. The roller 102 includes the core 124 and the covering 126 surrounding the core 124. The covering 126 is selected such that the compaction pressure 114 applied to the ply 202 of the ceramic composite material 200 is uniform along the contact-interface 116 between the roller 102 and the ply 202.

Referring now to Figs. 2 and 3, in one or more examples, the system 100 includes a robotic manipulator 148. In one or more examples, the robotic manipulator 148 includes a robotic arm 154 and an end effector 150 that is coupled to an end of the robotic arm 154. The roller 102 is coupled to the end effector 150. In one or more examples, the robotic manipulator 148 positions the roller 102 in contact with the ply-surface 210 of the ply 202 of the ceramic composite material 200, which is positioned on the compaction-surface 104. In one or more examples, the robotic arm 154 positions the roller 102 in relatively close proximity to the ply-surface 210 of the ply 202 and the end effector 150 positions the roller 102 in contact with the ply-surface 210 of the ply 202. As an example, the robotic manipulator 148, such as the end effector 150, includes at least one actuator 156 that is configured to move the roller 102 relative to the robotic arm 154 and/or the end effector 150 and to position the roller 102 in contact with the ply-surface 210 of the ply 202.

Referring now to Figs. 2 and 3, in one or more examples, the robotic manipulator 148 applies the compaction pressure 114 to the ply 202 using the roller 102. In one or more examples, the robotic arm 154 moves the roller 102 relative to the compaction-surface 104 to apply the compaction pressure 114 to the ply 202. In one or more examples, the end effector 150 moves the roller 102 relative to the compaction-surface 104 to apply the compaction pressure 114 to the ply 202. As an example, the robotic manipulator 148, such as the end effector 150, includes at least one actuator 156 that is configured to move the roller 102 relative to the robotic arm 154 and/or the end effector 150 and to apply the compaction pressure 114 on the ply 202 using the roller 102.

Referring now to Figs. 2 and 3, in one or more examples, with the roller 102 in contact with the ply-surface 210 and applying the compaction pressure 114, the robotic manipulator 148 moves the roller 102 across the ply 202. In one or more examples, the robotic arm 154 moves the roller 102 in the compaction path 160 across the ply 202 while the compaction pressure 114 is being applied to the ply 202. In one or more examples, the end effector 150 moves the roller 102 in the compaction path 160 across the ply 202 while the compaction pressure 114 is being applied to the ply 202. As an example, the robotic manipulator 148, such as the end effector 150, includes at least one actuator 156 that is configured to move the roller 102 and to apply the compaction pressure 114 on the ply 202 using the roller 102.

Referring now to Figs. 2 and 3, in one or more examples, the system 100 includes the tool 106. The tool 106 includes the tool-surface 108. With the roller 102 in contact with the ply-surface 210 and applying the compaction pressure 114, movement of the roller 102 across the ply 202 conforms the ply 202 to the tool-surface 108.

Referring now to Figs. 2 and 3, in one or more examples, the tool-surface 108 includes a contour 158. In one or more examples, the contour 158 is a complex contour in which the tool-surface 108 has a curvature in more than one axial direction.

Referring now to Figs. 2 and 3, in one or more examples, at least a portion of the compaction-surface 104 is formed by the tool-surface 108.

Referring now to Figs. 2 and 3, in one or more examples, at least a portion of the compaction-surface 104 is formed by the prior-ply-surface 210 of the prior-ply 110 of the ceramic composite material 200 positioned on the tool 106.

Referring to Fig. 2, in one or more examples, the covering 126 includes the foam 128.In one or more examples, the covering 126 includes the closed-cell foam 130. In one or more examples, the covering 126 includes an inflatable bladder 132. In one or more examples, the covering 126 is impermeable.

Referring to Fig. 2, in one or more examples, the covering 126 includes a Shore A hardness of between approximately 1 and 10. In one or more examples, the covering 126 includes the Shore A hardness of between approximately 3 and 7. In one or more examples, the covering 126 includes the Shore A hardness of approximately 5.

Referring to Fig. 2, in one or more examples, the covering 126 includes at least one of silicone, urethane, polyurethane, latex, and the like.

Referring to Figs. 2, 6 and 7, in one or more examples, the covering 126 includes the covering-material 134. In one or more examples, the covering-material 134 is selected such that the variation 118 in the compaction pressure 114 along the contact-interface 116 is less than 34.4748 kPa (5 PSI). In one or more examples, the covering-material 134 is selected such that the variation 118 in the compaction pressure 114 along the contact-interface 116 is less than 20,6843 kPa (3 PSI). In one or more examples, the covering-material 134 is selected such that the variation 118 in the compaction pressure 114 along the contact-interface 116 is less than 6.8948 kPa (1 PSI).

Referring to Figs. 2 and 5-7, in one or more examples, the covering-material 134 is validated using the pressure sensor film 144. In these examples, the pressure sensor film 144 generates the pressure data 166, which is transmitted to the computer 168, such as the feedback controller 152, for analysis.

Referring to Figs. 2 and 6-8, in one or more examples, the system 100 includes the pressure sensor film 144. The pressure sensor film 144 is configured to measure the compaction pressure 114. In these examples, the pressure sensor film 144 generates the pressure data 166, which is transmitted to the computer 168, such as the feedback controller 152, for analysis and adjustment of the contact-interface 116 as needed or desired to achieve and/or maintain uniformity.

Referring to Fig. 2, in one or more examples, the computer 168 includes any suitable data-processing system 170 configured to received, analyze, generate, and/or transmit various types of data, information, and/or signals, for example, to control or otherwise provide instructions operational components of the system 100 and/or perform the steps of the method 1000. In one or more examples, the data-processing system 170 includes at least one processor 172 and memory 174 storing instructions (e.g., program code 176) that, when executed, cause the processor 172 to initiate performance of one or more operational steps of the method 1000 or instructs the system 100 to perform one or more operational steps of the method 1000. In one or more examples, the processor 172 is configured to read from and write to the memory 174. In one or more examples, the processor 172 is configured to receive input commands and provide output commands. In one or more examples, the processor 172 is a multi-functional processor such as, for example, a central processing unit. In one or more examples, the functions of the processor 172 are performed by a local processor, a remote processor, or a combination thereof. In one or more examples, the processor 172 is implemented in hardware alone (e.g., a circuit, a microprocessor etc.) have certain aspects in software including firmware alone or can be a combination of hardware and software (including firmware). In one or more examples, the processor 172 can be implemented using instructions that enable hardware functionality, for example, by using executable computer program instructions (e.g., program code 176) in a general-purpose or special-purpose processing unit that is stored on the memory 174 or other computer readable storage medium (e.g., disk, memory, etc.) to be executed by the processor 172. The memory 174 stores a computer program (e.g., program code 176) that includes computer program instructions that control the operation of the processor 172 when loaded into processing circuitry. The computer program instructions provide the logic and routines that enable the processor 172 to perform the method 1000 illustrated in Fig. 2. The processing circuitry, by reading the memory 174, is able to load and execute the program code 176. The program code 176 may arrive at the processor 172 via any suitable delivery mechanism. The delivery mechanism may be, for example, a non-transitory computer-readable storage medium, a computer program product, a memory device, a record medium such as a compact disc read-only memory (CD-ROM) or digital versatile disc (DVD), an article of manufacture that tangibly embodies the computer program. The delivery mechanism may be a signal configured to reliably transfer the computer program. The apparatus may propagate or transmit the computer program as a computer data signal. Although the memory 174 is illustrated as a single component it may be implemented as one or more separate components some or all of which may be integrated/removable and/or may provide permanent/semi-permanent/dynamic/cached storage. References to "computer-readable storage medium," "computer program product," "tangibly embodied computer program," etc. or a "controller," "computer," "processor," etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

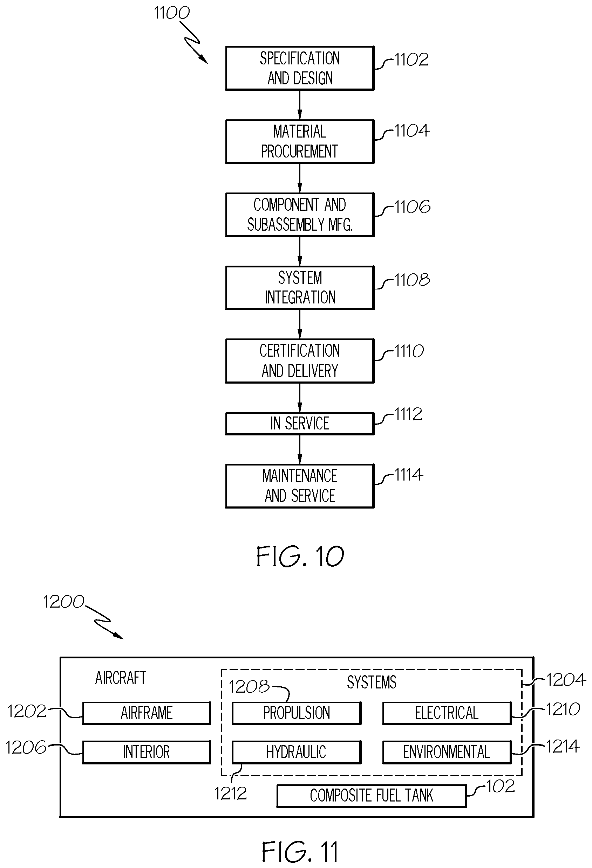

Referring now to Figs. 10 and 11, examples of the method 1000 and the system 100 described herein, may be related to, or used in the context of, the aerospace manufacturing and service method 1100, as shown in the flow diagram of Fig. 10 and an aircraft 1200, as schematically illustrated in Fig. 11. As an example, the aircraft 1200 and/or the manufacturing and service method 1100 may include or utilize components that are manufactured of ceramic matrix composite materials, which are compacted using the system 100 and/or according to the method 1000.

Referring to Fig. 11, which illustrates an example of the aircraft 1200. The aircraft 1200 can be any aerospace vehicle or platform. In one or more examples, the aircraft 1200 includes the airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems, such as, but not limited to, communications systems, avionics systems, software distribution systems, network communications systems, passenger information/entertainment systems, guidance systems, radar systems, weapons systems, and the like. The aircraft 1200 can have any number of components made of ceramic matrix composite materials, which are compacted using the system 100 and/or according to the method 1000.

Referring to Fig. 10, during pre-production of the aircraft 1200, the manufacturing and service method 1100 includes specification and design of the aircraft 1200 (block 1102) and material procurement (block 1104). During production of the aircraft 1200, component and subassembly manufacturing (block 1106) and system integration (block 1108) of the aircraft 1200 take place. Thereafter, the aircraft 1200 goes through certification and delivery (block 1110) to be placed in service (block 1112). Routine maintenance and service (block 1114) includes modification, reconfiguration, refurbishment, etc. of one or more systems of the aircraft 1200.

Each of the processes of the manufacturing and service method 1100 illustrated in Fig. 10 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

A method (1000) for compacting a ceramic composite material (200) comprising a ceramic reinforcement (204) and a ceramic matrix (208) according to an embodiment of the present application (see figures) comprises the steps of positioning a roller (102) in contact with a ply-surface (210) of a ply (202) of the ceramic composite material (200), wherein the ply (202) is positioned on a compaction-surface (104), applying a compaction pressure (114) to the ply (202) using the roller (102) such that the compaction pressure (114) is substantially uniformly distributed on the ply (202), and with the roller (102) in contact with the ply-surface (210) and applying the compaction pressure (114), moving the roller (102) across the ply (202) to conform the ply (202) of the ceramic composite material (200) to the compaction-surface (104). Optionally, such method further involves selecting a magnitude (122) of the compaction pressure (114), wherein the magnitude (122) of the compaction pressure (114) is selected to conform the ceramic reinforcement (204) of the ply (202) to a contour (158) of the compaction-surface (104) and maintain a desired thickness of the ply (202) while moving the roller (102) across the ply (202). Also optionally, with the roller (102) in contact with the ply-surface (210), adjusting the magnitude (122) of the compaction pressure (114) can be performed using a feedback controller (152).

In an illustrated embodiment the ceramic reinforcement (204) comprises at least one of carbon reinforcement fibers, silicon carbide reinforcement fibers, alumina reinforcement fibers, alumina silica reinforcement fibers, aluminum nitride reinforcing fibers, silicon nitride reinforcement fibers, mullite reinforcement fibers, silica/quartz reinforcement fibers, basalt reinforcement fibers, and zirconia reinforcement fibers. In combination with such specific ceramic reinforcement (204) or as a separate aspect the ceramic matrix (208) may comprise at least one of a carbon matrix, a silicon carbide matrix, an alumina matrix, an alumina silica matrix, an aluminum nitride matrix, a silicon nitride matrix, a mullite matrix, a geo-polymer matrix, and a zirconia matrix.

Preferably, the compaction pressure (114) is approximately uniform along a contact-interface (116) between the roller (102) and the ply (202) such that a variation (118) in the compaction pressure (114) along the contact-interface (116) is less than 34.4748 kPa (5 PSI).

Furthermore, the roller (102) preferably comprises a core (124), and a covering (126) surrounding the core (124). Optionally, such method further comprises a step of selecting a covering-material (134) for the covering (126), wherein the covering-material (134) is selected such that the compaction pressure (114) is uniform along a contact-interface (116) between the roller (102) and the ply (202) when moving the roller (102) across the ply (202). In such method the covering-material (134) is preferably selected such that a variation (118) in the compaction pressure (114) along the contact-interface (116) is less than 34.4748 kPa (5 PSI). Optionally, in such method the step of selecting the covering-material (134) comprises providing a test-roller (136) comprising a test-core (138) and a test-covering (140) surrounding the test-core (138), the test-covering (140) comprising a test-covering-material (142), positioning the test-roller (136) in contact with a pressure sensor film (144), applying the compaction pressure (114) to the pressure sensor film (144) using the test-roller (136) with the test-roller (136) in contact with the pressure sensor film (144) and applying the compaction pressure (114), moving the test-roller (136) across the pressure sensor film (144), measuring the compaction pressure (114) while moving the test-roller (136) across the pressure sensor film (144), determining whether the compaction pressure (114) is uniform along a test-contact-interface (146) between the test-roller (136) and the pressure sensor film (144) when moving the test-roller (136) across the pressure sensor film (144), and validating the test-covering-material (142) when the compaction pressure (114) is uniform along the test-contact-interface (146), and the compaction pressure (114) is determined as uniform when a variation (118) in the compaction pressure (114) along the test-contact-interface (146) is less than 34.4748 kPa (5 PSI). Providing test-roller (136) enables an effective means for determining the compaction pressure. The measuring of the compaction pressure with such test-roller contributes to better insights for one or more of enhancement of material selection, movement speed, compaction pressure, pressure uniformity, and the like. This enables improving the compacting process. This test-roller (13) can be applied in combination with or without the application of pressure sensor film (144), for example..

As a further step method (1000) may further comprises measuring the compaction pressure (114) while moving the roller (102) across the ply (202), and adjusting the compaction pressure (114) in response to the measuring when the compaction pressure (114) is not uniform along a contact-interface (116) between the roller (102) and the ply (202). Optionally, in such method, the step of measuring the compaction pressure (114) comprises positioning a pressure sensor film (144) in contact with the ply-surface (210) of the ply (202), positioning the roller (102) in contact with the pressure sensor film (144), applying the compaction pressure (114) to the pressure sensor film (144) using the roller (102), with the roller (102) in contact with the pressure sensor film (144) and applying the compaction pressure (114), moving the roller (102) across the pressure sensor film (144), measuring the compaction pressure (114) while moving the roller (102) across the pressure sensor film (144); determining whether the compaction pressure (114) is uniform along a contact-interface (116) between the roller (102) and the pressure sensor film (144) when moving the roller (102) across the pressure sensor film (144), and the compaction pressure (114) is determined as uniform when a variation (118) in the compaction pressure (114) along the contact-interface (116) is less than 34.4748 kPa (5 PSI). The measuring of the compaction pressure contributes to better insights for one or more of enhancement of material selection, movement speed, compaction pressure, pressure uniformity, and the like. This enables improving the compacting process. This measuring step and/or measuring system can be applied in combination with or without the application of a test-roller.

Also as a further step, method (1000) may comprise the additional step of providing the covering (126) surrounding the core (124) with a closed-cell foam (130) having a Shore A hardness of approximately 5.

A system (100) for compacting a ceramic composite material (200) according to an embodiment of the present application (see figures) comprises a roller (102) comprising a core (124) and a covering (126) surrounding the core (124), wherein the covering (126) is selected such that a compaction pressure (114) applied to a ply (202) of the ceramic composite material (200) is uniform along a contact-interface (116) between the roller (102) and the ply (202). Preferably, the system (100) further comprises a robotic manipulator (148) having an end effector (150), wherein the roller (102) is coupled to the end effector (150), the robotic manipulator (148) is configured for positioning the roller (102) in contact with a ply-surface (210) of the ply (202) of the ceramic composite material (200) positioned on a compaction-surface (104), the robotic manipulator (148) is configured for applying the compaction pressure (114) to the ply (202) using the roller (102), and with the roller (102) in contact with the ply-surface (210) and applying the compaction pressure (114), the robotic manipulator (148) is configured for moving the roller (102) across the ply (202).

Preferably, the covering (126) comprises a covering-material (134), and the covering-material (134) is selected such that a variation (118) in the compaction pressure (114) along the contact-interface (116) is less than 34.4748 kPa (5 PSI). Optionally, the covering (126) comprises one of foam (128), closed-cell foam (130), or an inflatable bladder (132). Preferably, the covering (126) comprises a Shore A hardness of between approximately 1 and 10, more preferably between approximately 3 and 7, and most preferably the covering (126) comprises the Shore A hardness of approximately 5. Optionally, the covering (126) comprises at least one of silicone, urethane, polyurethane, and latex.

Examples of the method 1000 and the system 100, shown and described herein, may be employed during any one or more of the stages of the manufacturing and service method 1100 shown in the flow diagram illustrated by Fig. 10. In an example, components of the aircraft 1200 can be manufactured of ceramic matrix composite materials compacted using the system 100 and/or according to the method 1000 during a portion of component and subassembly manufacturing (block 1106) and/or system integration (block 1108). Further, components of the aircraft 1200 can be manufactured of ceramic matrix composite materials compacted using the system 100 and/or according to the method 1000 while the aircraft 1200 is in service (block 1112). Also, components of the aircraft 1200 can be manufactured of ceramic matrix composite materials compacted using the system 100 and/or according to the method 1000 during system integration (block 1108) and certification and delivery (block 1110). Similarly, components of the aircraft 1200 can be manufactured of ceramic matrix composite materials compacted using the system 100 and/or according to the method 1000 while the aircraft 1200 is in service (block 1112) and during maintenance and service (block 1114).

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 2-9 and 11, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 2-9 and 11, referred to above, need be included in every example and not all elements, features, and/or components described herein are necessarily depicted in each illustrative example. Accordingly, some of the elements, features, and/or components described and illustrated in Figs. 2-9 and 11 may be combined in various ways without the need to include other features described and illustrated in Figs. 2-9 and 11, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 2-9 and 11, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 2-9 and 11, and such elements, features, and/or components may not be discussed in detail herein with reference to each of Figs. 2-9 and 11. Similarly, all elements, features, and/or components may not be labeled in each of Figs. 2-9 and 11, but reference numerals associated therewith may be utilized herein for consistency.

In Figs. 1 and 10, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 1 and 10 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the system 100 and the method 1000 have been shown and described, modifications may occur to those skilled in the art upon reading the specification. The present application includes such modifications and is limited only by the scope of the claims.

## Claims

1. A method (1000) for compacting a ceramic composite material (200) comprising a ceramic reinforcement (204) and a ceramic matrix (208), the method (1000) comprising steps of:
positioning a roller (102) in contact with a ply-surface (210) of a ply (202) of the ceramic composite material (200), wherein the ply (202) is positioned on a compaction-surface (104);
applying a compaction pressure (114) to the ply (202) using the roller (102) such that the compaction pressure (114) is substantially uniformly distributed on the ply (202); and
with the roller (102) in contact with the ply-surface (210) and applying the compaction pressure (114), moving the roller (102) across the ply (202) to conform the ply (202) of the ceramic composite material (200) to the compaction-surface (104).
further comprising providing the roller (102), wherein the roller (102) comprises:
a core (124); and
a covering (126) surrounding the core (124),
further comprising a step of selecting a covering-material (134) for the covering (126), wherein the covering-material (134) is selected such that the compaction pressure (114) is uniform along a contact-interface (116) between the roller (102) and the ply (202) when moving the roller (102) across the ply (202) wherein:
the step of selecting the covering-material (134) comprises:
providing a test-roller (136) comprising a test-core (138) and a test-covering (140) surrounding the test-core (138), the test-covering (140) comprising a test-covering-material (142);
positioning the test-roller (136) in contact with a pressure sensor film (144);
applying the compaction pressure (114) to the pressure sensor film (144) using the test-roller (136);
with the test-roller (136) in contact with the pressure sensor film (144) and applying the compaction pressure (114), moving the test-roller (136) across the pressure sensor film (144);
measuring the compaction pressure (114) while moving the test-roller (136) across the pressure sensor film (144);
determining whether the compaction pressure (114) is uniform along a test-contact-interface (146) between the test-roller (136) and the pressure sensor film (144) when moving the test-roller (136) across the pressure sensor film (144); and
validating the test-covering-material (142) when the compaction pressure (114) is uniform along the test-contact-interface (146); and
the compaction pressure (114) is determined as uniform when a variation (118) in the compaction pressure (114) along the test-contact-interface (146) is less than 34.4748 kPa (5 PSI).

2. The method (1000) of claim 1, further comprising selecting a magnitude (122) of the compaction pressure (114), wherein the magnitude (122) of the compaction pressure (114) is selected to conform the ceramic reinforcement (204) of the ply (202) to a contour (158) of the compaction-surface (104) and maintain a desired thickness of the ply (202) while moving the roller (102) across the ply (202).

3. The method (1000) of claim 2, further comprising, with the roller (102) in contact with the ply-surface (210), adjusting the magnitude (122) of the compaction pressure (114) using a feedback controller (152).

4. The method (1000) of claim 1, 2 or 3, wherein:
the ceramic reinforcement (204) comprises at least one of carbon reinforcement fibers, silicon carbide reinforcement fibers, alumina reinforcement fibers, alumina silica reinforcement fibers, aluminum nitride reinforcing fibers, silicon nitride reinforcement fibers, mullite reinforcement fibers, silica/quartz reinforcement fibers, basalt reinforcement fibers, and zirconia reinforcement fibers.

5. The method (1000) of any of the preceding claims, wherein the ceramic matrix (208) comprises at least one of a carbon matrix, a silicon carbide matrix, an alumina matrix, an alumina silica matrix, an aluminum nitride matrix, a silicon nitride matrix, a mullite matrix, a geo-polymer matrix, and a zirconia matrix.

6. The method (1000) of any of the preceding claims, wherein the compaction pressure (114) is approximately uniform along a contact-interface (116) between the roller (102) and the ply (202) such that a variation (118) in the compaction pressure (114) along the contact-interface (116) is less than 34.4748 kPa (5 PSI).

7. The method (1000) of any of the preceding claims, wherein the covering-material (134) is selected such that a variation (118) in the compaction pressure (114) along the contact-interface (116) is less than 34.4748 kPa (5 PSI).

8. The method (1000) of any of the preceding claims, further comprising:
measuring the compaction pressure (114) while moving the roller (102) across the ply (202); and
adjusting the compaction pressure (114) in response to the measuring when the compaction pressure (114) is not uniform along a contact-interface (116) between the roller (102) and the ply (202).

9. The method (1000) of the preceding claim, wherein:
the step of measuring the compaction pressure (114) comprises:
positioning a pressure sensor film (144) in contact with the ply-surface (210) of the ply (202);
positioning the roller (102) in contact with the pressure sensor film (144);
applying the compaction pressure (114) to the pressure sensor film (144) using the roller (102);
with the roller (102) in contact with the pressure sensor film (144) and applying the compaction pressure (114), moving the roller (102) across the pressure sensor film (144);
measuring the compaction pressure (114) while moving the roller (102) across the pressure sensor film (144); and
determining whether the compaction pressure (114) is uniform along a contact-interface (116) between the roller (102) and the pressure sensor film (144) when moving the roller (102) across the pressure sensor film (144); and
the compaction pressure (114) is determined as uniform when a variation (118) in the compaction pressure (114) along the contact-interface (116) is less than 34.4748 kPa (5 PSI).

10. The method (1000) according to any of the preceding claims, wherein the covering (126) surrounding the core (124) comprising a closed-cell foam (130) having a Shore A hardness of approximately 5.

## Patentansprüche

1. Verfahren (1000) zum Verdichten eines keramischen Verbundwerkstoffs (200), umfassend eine keramische Verstärkung (204) und eine keramische Matrix (208), wobei das Verfahren (1000) die Schritte umfasst:
Positionieren einer Walze (102) in Kontakt mit einer Lagenoberfläche (210) einer Lage (202) des keramischen Verbundwerkstoffs (200), wobei die Lage (202) auf einer Verdichtungsoberfläche (104) positioniert ist;
derartiges Anwenden eines Verdichtungsdrucks (114) auf die Lage (202) unter Verwendung der Walze (102), dass der Verdichtungsdruck (114) im Wesentlichen gleichmäßig auf der Lage (202) verteilt ist; und
während die Walze (102) in Kontakt mit der Lagenoberfläche (210) steht und den Verdichtungsdruck (114) anwendet, Bewegen der Walze (102) über die Lage (202), um die Lage (202) des keramischen Verbundwerkstoffs (200) an die Verdichtungsoberfläche (104) anzupassen.
ferner umfassend ein Bereitstellen der Walze (102), wobei die Walze (102) umfasst:
einen Kern (124); und
eine Hülle (126), die den Kern (124) umgibt,
ferner umfassend einen Schritt eines Auswählens eines Hüllmaterials (134) für die Hülle (126), wobei das Hüllmaterial (134) derart ausgewählt ist, dass der Verdichtungsdruck (114) entlang einer Kontaktgrenzfläche (116) zwischen der Walze (102) und der Lage (202) gleichmäßig ist, wenn die Walze (102) über die Lage (202) bewegt wird, wobei:
der Schritt des Auswählens des Hüllmaterials (134) umfasst:
Bereitstellen einer Testwalze (136), umfassend einen Testkern (138) und eine Testhülle (140), die den Testkern (138) umgibt, die Testhülle (140) umfassend ein Testhüllmaterial (142);
Positionieren der Testwalze (136) in Kontakt mit einem Drucksensorfilm (144);
Anwenden des Verdichtungsdrucks (114) auf den Drucksensorfilm (144) unter Verwendung der Testwalze (136);
während die Testwalze (136) in Kontakt mit dem Drucksensorfilm (144) steht und den Verdichtungsdruck (114) anwendet, Bewegen der Testwalze (136) über den Drucksensorfilm (144);
Messen des Verdichtungsdrucks (114) während des Bewegens der Testwalze (136) über den Drucksensorfilm (144);
Bestimmen, ob der Verdichtungsdruck (114) entlang einer Testkontaktgrenzfläche (146) zwischen der Testwalze (136) und dem Drucksensorfilm (144) bei dem Bewegen der Testwalze (136) über den Drucksensorfilm (144) gleichmäßig ist; und
Validieren des Testhüllmaterials (142), wenn der Verdichtungsdruck (114) entlang der Testkontaktgrenzfläche (146) gleichmäßig ist; und
der Verdichtungsdruck (114) als gleichmäßig bestimmt wird, wenn eine Schwankung (118) des Verdichtungsdrucks (114) entlang der Testkontaktgrenzfläche (146) kleiner als 34,4748 kPa (5 PSI) ist.

2. Verfahren (1000) nach Anspruch 1, ferner umfassend das Auswählen einer Größe (122) des Verdichtungsdrucks (114), wobei die Größe (122) des Verdichtungsdrucks (114) ausgewählt wird, um die keramische Verstärkung (204) der Lage (202) an eine Kontur (158) der Verdichtungsoberfläche (104) anzupassen und eine gewünschte Dicke der Lage (202) beizubehalten, während die Walze (102) über die Lage (202) bewegt wird.

3. Verfahren (1000) nach Anspruch 2, das ferner, während die Walze (102) in Kontakt mit der Lagenoberfläche (210) steht, das Einstellen der Größe (122) des Verdichtungsdrucks (114) unter Verwendung eines Rückkopplungsreglers (152) umfasst.

4. Verfahren (1000) nach Anspruch 1, 2 oder 3, wobei:
die keramische Verstärkung (204) mindestens eines von Kohlenstoffverstärkungsfasern, Siliziumkarbidverstärkungsfasern, Tonerdeverstärkungsfasern, Tonerdesiliziumdioxidverstärkungsfasern, Aluminiumnitridverstärkungsfasern, Siliziumnitridverstärkungsfasern, Mullitverstärkungsfasern, Siliziumdioxid-/Quarzverstärkungsfasern, Basaltverstärkungsfasern und Zirkonoxidverstärkungsfasern umfasst.

5. Verfahren (1000) nach einem der vorstehenden Ansprüche, wobei die Keramikmatrix (208) mindestens eine von einer Kohlenstoffmatrix, einer Siliziumcarbidmatrix, einer Tonerdematrix, einer Tonerdesiliziumdioxidmatrix, einer Aluminiumnitridmatrix, einer Siliziumnitridmatrix, einer Mullitmatrix, einer Geopolymermatrix und einer Zirkonoxidmatrix umfasst.

6. Verfahren (1000) nach einem der vorstehenden Ansprüche, wobei der Verdichtungsdruck (114) entlang einer Kontaktgrenzfläche (116) zwischen der Walze (102) und der Lage (202) etwa derart gleichmäßig ist, dass eine Schwankung (118) des Verdichtungsdrucks (114) entlang der Kontaktgrenzfläche (116) kleiner als 34,4748 kPa (5 PSI) ist.

7. Verfahren (1000) nach einem der vorstehenden Ansprüche, wobei das Hüllmaterial (134) derart ausgewählt ist, dass eine Schwankung (118) des Verdichtungsdrucks (114) entlang der Kontaktgrenzfläche (116) kleiner als 34,4748 kPa (5 PSI) ist.

8. Verfahren (1000) nach einem der vorstehenden Ansprüche, ferner umfassend:
Messen des Verdichtungsdrucks (114) während des Bewegens der Walze (102) über die Lage (202); und
Anpassen des Verdichtungsdrucks (114) als Reaktion auf das Messen, wenn der Verdichtungsdruck (114) entlang einer Kontaktgrenzfläche (116) zwischen der Walze (102) und der Lage (202) nicht gleichmäßig ist.

9. Verfahren (1000) nach dem vorstehenden Anspruch, wobei:
der Schritt des Messens des Verdichtungsdrucks (114) umfasst:
Positionieren eines Drucksensorfilms (144) in Kontakt mit der Lagenoberfläche (210) der Lage (202);
Positionieren der Walze (102) in Kontakt mit dem Drucksensorfilm (144);
Anwenden des Verdichtungsdrucks (114) auf den Drucksensorfilm (144) unter Verwendung der Walze (102);
während die Walze (102) in Kontakt mit dem Drucksensorfilm (144) steht und den Verdichtungsdruck (114) anwendet, Bewegen der Walze (102) über den Drucksensorfilm (144);
Messen des Verdichtungsdrucks (114), während die Walze (102) über den Drucksensorfilm (144) bewegt wird; und
Bestimmen, ob der Verdichtungsdruck (114) entlang einer Kontaktgrenzfläche (116) zwischen der Walze (102) und dem Drucksensorfilm (144) bei dem Bewegen der Walze (102) über den Drucksensorfilm (144) gleichmäßig ist; und
der Verdichtungsdruck (114) als gleichmäßig bestimmt wird, wenn eine Schwankung (118) des Verdichtungsdrucks (114) entlang der Kontaktgrenzfläche (116) kleiner als 34,4748 kPa (5 PSI) ist.

10. Verfahren (1000) nach einem der vorstehenden Ansprüche, wobei die Hülle (126), die den Kern (124) umgibt, einen geschlossenzelligen Schaumstoff (130) mit einer Shore-A-Härte von etwa 5 umfasst.

## Revendications

1. Procédé (1000) de compactage d'un matériau composite céramique (200) comprenant un renfort céramique (204) et une matrice céramique (208), le procédé (1000) comprenant les étapes consistant à :
positionner un rouleau (102) en contact avec une surface de pli (210) d'un pli (202) du matériau composite céramique (200), dans lequel le pli (202) est positionné sur une surface de compactage (104) ;
appliquer une pression de compactage (114) sur le pli (202) au moyen du rouleau (102) de sorte que la pression de compactage (114) soit répartie de manière sensiblement uniforme sur le pli (202) ; et
le rouleau (102) étant en contact avec la surface de pli (210) et la pression de compactage (114) étant appliquée, déplacer le rouleau (102) sur le pli (202) pour conformer le pli (202) du matériau composite céramique (200) à la surface de compactage (104).
comprenant en outre la fourniture du rouleau (102), dans lequel le rouleau (102) comprend :
un mandrin (124) ; et
un revêtement (126) entourant le mandrin (124),
comprenant en outre une étape de sélection d'un matériau de revêtement (134) pour le revêtement (126), dans lequel le matériau de revêtement (134) est sélectionné de telle sorte que la pression de compactage (114) soit uniforme le long d'une interface de contact (116) entre le rouleau (102) et le pli (202) lors du déplacement du rouleau (102) sur le pli (202), dans lequel :
l'étape de sélection du matériau de revêtement (134) comprend :
la fourniture d'un rouleau d'essai (136) comprenant un mandrin d'essai (138) et un revêtement d'essai (140) entourant le mandrin d'essai (138), le revêtement d'essai (140) comprenant un matériau de revêtement d'essai (142) ;
le positionnement du rouleau d'essai (136) en contact avec un film capteur de pression (144) ;
l'application de la pression de compactage (114) au film capteur de pression (144) au moyen du rouleau d'essai (136) ;
le rouleau d'essai (136) étant en contact avec le film capteur de pression (144) et la pression de compactage (114) étant appliquée, le déplacement du rouleau d'essai (136) sur le film capteur de pression (144) ;
la mesure de la pression de compactage (114) tout en déplaçant le rouleau d'essai (136) sur le film capteur de pression (144) ;
le fait de déterminer si la pression de compactage (114) est uniforme le long d'une interface de contact d'essai (146) entre le rouleau d'essai (136) et le film capteur de pression (144) lors du déplacement du rouleau d'essai (136) sur le film capteur de pression (144) ; et
la validation du matériau de revêtement d'essai (142) lorsque la pression de compactage (114) est uniforme le long de l'interface de contact d'essai (146) ; et
la pression de compactage (114) est déterminée comme étant uniforme lorsqu'une variation (118) de la pression de compactage (114) le long de l'interface de contact d'essai (146) est inférieure à 34,4748 kPa (5 PSI).

2. Procédé (1000) selon la revendication 1, comprenant en outre la sélection d'une intensité (122) de la pression de compactage (114), dans lequel l'intensité (122) de la pression de compactage (114) est sélectionnée pour conformer le renfort en céramique (204) du pli (202) à un contour (158) de la surface de compactage (104) et maintenir une épaisseur souhaitée du pli (202) tout en déplaçant le rouleau (102) sur le pli (202).

3. Procédé (1000) selon la revendication 2, comprenant en outre, le rouleau (102) étant en contact avec la surface de pli (210), l'ajustement de l'intensité (122) de la pression de compactage (114) au moyen d'un dispositif de commande à rétroaction (152).

4. Procédé (1000) selon la revendication 1, 2 ou 3, dans lequel :
le renfort céramique (204) comprend au moins l'une parmi des fibres de renfort en carbone, des fibres de renfort en carbure de silicium, des fibres de renfort en alumine, des fibres de renfort en alumine-silice, des fibres de renfort en nitrure d'aluminium, des fibres de renfort en nitrure de silicium, des fibres de renfort en mullite, des fibres de renfort en silice/quartz, des fibres de renfort en basalte et des fibres de renfort en zircone.

5. Procédé (1000) selon l'une quelconque des revendications précédentes, dans lequel la matrice céramique (208) comprend au moins l'une parmi une matrice de carbone, une matrice de carbure de silicium, une matrice d'alumine, une matrice d'alumine-silice, une matrice de nitrure d'aluminium, une matrice de nitrure de silicium, une matrice de mullite, une matrice de géopolymère et une matrice de zircone.

6. Procédé (1000) selon l'une quelconque des revendications précédentes, dans lequel la pression de compactage (114) est approximativement uniforme le long d'une interface de contact (116) entre le rouleau (102) et le pli (202) de telle sorte qu'une variation (118) de la pression de compactage (114) le long de l'interface de contact (116) est inférieure à 34,4748 kPa (5 PSI).

7. Procédé (1000) selon l'une quelconque des revendications précédentes, dans lequel le matériau de revêtement (134) est sélectionné de telle sorte qu'une variation (118) de la pression de compactage (114) le long de l'interface de contact (116) est inférieure à 34,4748 kPa (5 PSI).

8. Procédé (1000) selon l'une quelconque des revendications précédentes, comprenant en outre :
la mesure de la pression de compactage (114) tout en déplaçant le rouleau (102) sur le pli (202) ; et
l'ajustement de la pression de compactage (114) en réponse à la mesure lorsque la pression de compactage (114) n'est pas uniforme le long d'une interface de contact (116) entre le rouleau (102) et le pli (202).

9. Procédé (1000) selon la revendication précédente, dans lequel :
l'étape de mesure de la pression de compactage (114) comprend :
le positionnement d'un film capteur de pression (144) en contact avec la surface de pli (210) du pli (202) ;
le positionnement du rouleau (102) en contact avec le film capteur de pression (144) ;
l'application de la pression de compactage (114) au film capteur de pression (144) à l'aide du rouleau (102) ;
le rouleau (102) étant en contact avec le film capteur de pression (144) et la pression de compactage (114) étant appliquée, le déplacement du rouleau (102) sur le film capteur de pression (144) ;
la mesure de la pression de compactage (114) tout en déplaçant le rouleau (102) sur le film capteur de pression (144) ; et
le fait de déterminer si la pression de compactage (114) est uniforme le long d'une interface de contact (116) entre le rouleau (102) et le film capteur de pression (144) lors du déplacement du rouleau (102) sur le film capteur de pression (144) ; et
la pression de compactage (114) est déterminée comme uniforme lorsqu'une variation (118) de la pression de compactage (114) le long de l'interface de contact (116) est inférieure à 34,4748 kPa (5 PSI).

10. Procédé (1000) selon l'une quelconque des revendications précédentes, dans lequel le revêtement (126) entourant le mandrin (124) comprend une mousse à cellules fermées (130) ayant une dureté Shore A d'environ 5.
